# EUROPEAN PATENT APPLICATION

(11) **EP 3 550 821 A1**
(43) Date of publication of application: **09.10.2019**
(21) Application number: 17876643.2
(22) Date of filing: 15.11.2017
(51) Int. Cl.: H04N 5/232

(54) **IMAGING DEVICE, IMAGING CONTROL METHOD, AND PROGRAM**

(30) Priority: 29.11.2016 JP 2016230898
(71) Applicant: Sony Corporation, Tokyo 108-0075 (JP)
(72) Inventor: WAKATSUKI, Masashi, Tokyo 108-0075 (JP)
(74) Representative: D Young & Co LLP
(86) International application number: PCT/JP2017/041011
(87) International publication number: WO 2018/101034

(57) **Abstract**

The present technology relates to an imaging device, an imaging control method, and a program that enable a plurality of imaging devices to be synchronized with each other, without connection by a cable. The imaging device includes a rolling shutter type imaging element; an analysis unit analyzing a light reception distribution to be a distribution of a light reception amount of a pixel column direction of the imaging element for pulsed light of a predetermined frequency; and an imaging control unit adjusting an imaging timing of the imaging element, on the basis of the light reception distribution. The present technology can be applied to an imaging device including a rolling shutter type CMOS image sensor, for example.

## Description

### TECHNICAL FIELD

The present technology relates to an imaging device, an imaging control method, and a program, and particularly, to an imaging device, an imaging control method, and a program suitable for use in a case where a plurality of imaging devices is synchronized and performs imaging.

### BACKGROUND ART

Conventionally, it is proposed that synchronization reference signals are supplied from a controller to a plurality of imaging devices and imaging timings are synchronized between the imaging devices, on the basis of the synchronization reference signals (for example, refer to Patent Document 1).

### CITATION LIST

### PATENT DOCUMENT

Patent Document 1: Japanese Patent Application Laid-Open No. 2006-295854

### SUMMARY OF THE INVENTION

### PROBLEMS TO BE SOLVED BY THE INVENTION

However, in the invention described in Patent Document 1, it is necessary to connect the controller and each imaging device by a cable. The cable connection work is complicated, and installation positions of the imaging device and the controller may be restricted due to the wiring of the cable and the like.

The present technology has been made in view of the above circumstances and is to enable a plurality of imaging devices to be synchronized with each other, without connection by a cable.

### SOLUTIONS TO PROBLEMS

An imaging device according to an aspect of the present technology includes a rolling shutter type first imaging element; an analysis unit analyzing a light reception distribution to be a distribution of a light reception amount of a pixel column direction of the first imaging element for pulsed light of a predetermined frequency; and an imaging control unit adjusting an imaging timing of the first imaging element, on the basis of the light reception distribution.

The analysis unit can detect a brightness peak row to be a pixel row in which a brightness peaks in the light reception distribution, and the imaging control unit can adjust the imaging timing of the first imaging element and match the brightness peak row with a target peak row to be a predetermined pixel row.

The target peak row can be set in a used region to be a display target of the first imaging element, and the imaging control unit can adjust the imaging timing of the first imaging element at the time of starting imaging.

The target peak row can be set in an unused region not to be a display target of the first imaging element.

The imaging control unit can adjust the imaging timing of the first imaging element in parallel with imaging.

The pulsed light can be visible light.

The imaging device further includes a communication unit wirelessly communicating with a lighting device emitting the pulsed light; and a lighting control unit controlling the lighting device via the communication unit. In a case where setting of the target peak row in the unused region is enabled, the lighting control unit can cause the lighting device to emit the pulsed light, and in a case where the setting of the target peak row in the unused region is disabled, the lighting control unit can cause the lighting device to stop emission of the pulsed light.

The pulsed light can be emitted at an interval of two frames or more at a frame rate of the first imaging element, and the analysis unit can detect the brightness peak row, on the basis of a differential image between a first image imaged by the first imaging element at a timing at which the pulsed light is emitted and a second image imaged by the first imaging element at a timing at which the pulsed light is not emitted.

In a case where an aspect ratio of the first imaging element and an aspect ratio of the used region are not matched, the imaging control unit can cause adjustment of the imaging timing of the first imaging element based on the light reception distribution to be performed, and in a case where the aspect ratio of the first imaging element and the aspect ratio of the used region are matched, the imaging control unit can cause the adjustment of the imaging timing of the first imaging element based on the light reception distribution not to be performed.

The imaging control unit can adjust exposure and read start timings of each pixel row of the first imaging element.

The imaging control unit can adjust the exposure and read start timings of each pixel row of the first imaging element, by adjusting a speed of an operation clock used for generating a vertical synchronization signal and a horizontal synchronization signal to be supplied to the first imaging element.

The imaging device further includes a rolling shutter type second imaging element not having sensitivity to a wavelength region of the pulsed light. The first imaging element can have the sensitivity to the wavelength region of the pulsed light, and the imaging control unit can supply the vertical synchronization signal and the horizontal synchronization signal of the same phase and the same frequency to the first imaging element and the second imaging element.

The pulsed light can be infrared light.

A frequency of the pulsed light can be set on the basis of a frame rate of the first imaging element.

An imaging control method according to an aspect of the present technology includes an analysis step of analyzing a light reception distribution to be a distribution of a light reception amount of a pixel column direction for pulsed light of a predetermined frequency of a rolling shutter type imaging element; and an imaging control step of adjusting an imaging timing of the imaging element, on the basis of the light reception distribution.

A program according to an aspect of the present technology causes a computer to execute processing including: an analysis step of analyzing a light reception distribution to be a distribution of a light reception amount of a pixel column direction for pulsed light of a predetermined frequency of a rolling shutter type imaging element; and an imaging control step of adjusting an imaging timing of the imaging element, on the basis of the light reception distribution.

In an aspect of the present technology, the light reception distribution to be the distribution of the light reception amount of the pixel column direction for the pulsed light of the predetermined frequency of the rolling shutter type imaging element is analyzed, and the imaging timing of the imaging element is adjusted on the basis of the light reception distribution.

### EFFECTS OF THE INVENTION

According to an aspect of the present technology, it is possible to synchronize a plurality of imaging devices with each other, without connection by a cable.

In addition, the effect described here is not necessarily limited, and may be any effect described in the present disclosure.

### BRIEF DESCRIPTION OF DRAWINGS

Fig. 1 is a block diagram showing a first embodiment of an imaging system to which the present technology is applied.
Fig. 2 is a block diagram showing a configuration example of a lighting device of Fig. 1.
Fig. 3 is a block diagram showing a configuration example of an imaging device of Fig. 1.
Fig. 4 is a flowchart illustrating synchronization control processing executed by the imaging device of Fig. 3.
Fig. 5 is a diagram illustrating a method of analyzing a light reception distribution.
Fig. 6 is a diagram illustrating a method of adjusting imaging timing.
Fig. 7 is a diagram illustrating a method of adjusting imaging timing.
Fig. 8 is a block diagram showing a second embodiment of an imaging system to which the present technology is applied.
Fig. 9 is a block diagram showing a configuration example of a lighting device of Fig. 8.
Fig. 10 is a block diagram showing a configuration example of an imaging device of Fig. 8.
Fig. 11 is a flowchart illustrating synchronization control processing executed by the imaging device of Fig. 10.
Fig. 12 is a diagram showing an example of a position of a target peak row.
Fig. 13 is a block diagram showing a third embodiment of a lighting device.
Fig. 14 is a block diagram showing a third embodiment of an imaging device.
Fig. 15 is a block diagram showing a fourth embodiment of an imaging system to which the present technology is applied.
Fig. 16 is a diagram showing an appearance configuration example of a lighting device of Fig. 15.
Fig. 17 is a block diagram showing a configuration example of an imaging device of Fig. 15.
Fig. 18 is a diagram illustrating synchronization control processing executed by the imaging device of Fig. 17.

### MODE FOR CARRYING OUT THE INVENTION

Hereinafter, modes for carrying out the invention (hereinafter, referred to as "embodiments") will be described in detail using the drawings. In addition, the description will be made in the following order
1. First embodiment (example of performing synchronization control using infrared pulsed light)
2. Second embodiment (example of performing synchronization control using visible pulsed light in parallel with imaging)
3. Third embodiment (example of controlling a lighting device by an imaging device)
4. Fourth embodiment (example of performing synchronization control using visible pulsed light at the time of starting imaging)
5. Modification
6. Application example

### <<1. First embodiment>>

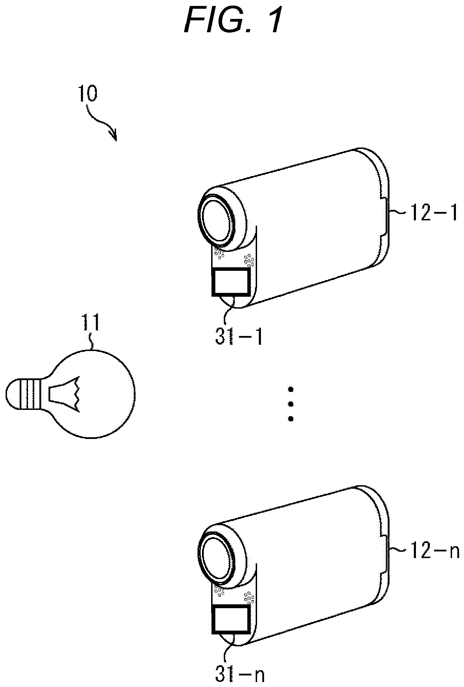

First, a first embodiment of the present technology will be described with reference to Figs. 1 to 7.

### <Configuration example of imaging system>

Fig. 1 is a block diagram showing a configuration example of an imaging system 10 to which the present technology is applied.

The imaging system 10 includes a lighting device 11 and n imaging devices 12-1 to 12-n.

The lighting device 11 emits pulsed light (hereinafter, referred to as infrared pulsed light) including infrared light.

The imaging devices 12-1 to 12-n include imaging elements 31-1 to 31-n for control, respectively. Each of the imaging elements 31-1 to 31-n for control includes a rolling shutter type complementary metal oxide semiconductor (CMOS) image sensor having at least sensitivity to a wavelength region of the infrared pulsed light, for example. The imaging devices 12-1 to 12-n perform imaging while being synchronized with each other, according to the infrared pulsed light.

In addition, the lighting device 11 may be provided separately from the imaging devices 12-1 to 12-n or may be included in any one of the imaging devices 12-1 to 12-n. However, in any case, the lighting device 11 is preferably arranged so that light reception surfaces of the imaging elements 31-1 to 31-n for control in the imaging devices 12-1 to 12-n are irradiated with the infrared pulsed light substantially uniformly.

Further, hereinafter, in a case where it is not necessary to distinguish the imaging devices 12-1 to 12-n, they are simply referred to as the imaging devices 12. Hereinafter, in a case where it is not necessary to distinguish the imaging elements 31-1 to 31-n for control, they are simply referred to as the imaging elements 31 for control. Further, the number of imaging devices 12 can be set to any number of two or more.

### <Configuration example of lighting device>

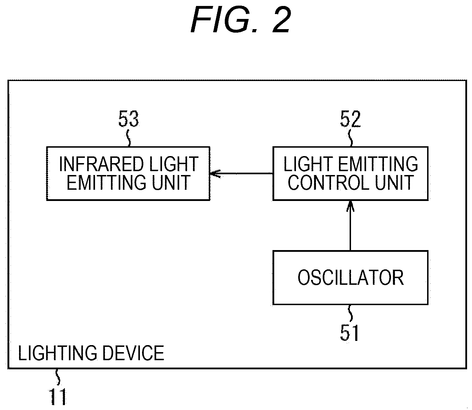

Fig. 2 is a block diagram showing a configuration example of the lighting device 11 of Fig. 1.

The lighting device 11 includes an oscillator 51, a light emitting control unit 52, and an infrared light emitting unit 53.

The oscillator 51 generates a clock signal of a predetermined frequency and supplies the clock signal to the light emitting control unit 52.

The light emitting control unit 52 generates a light emitting control signal, on the basis of the clock signal from the oscillator 51, and supplies the light emitting control signal to the infrared light emitting unit 53 to control the light emitting timing, the light emitting intensity, and the like, of the infrared light emitting unit 53.

The infrared light emitting unit 53 includes a light emitting device such as a light emitting diode (LED), for example, and emits the infrared pulsed light on the basis of the light emitting control signal.

### <Configuration example of imaging device>

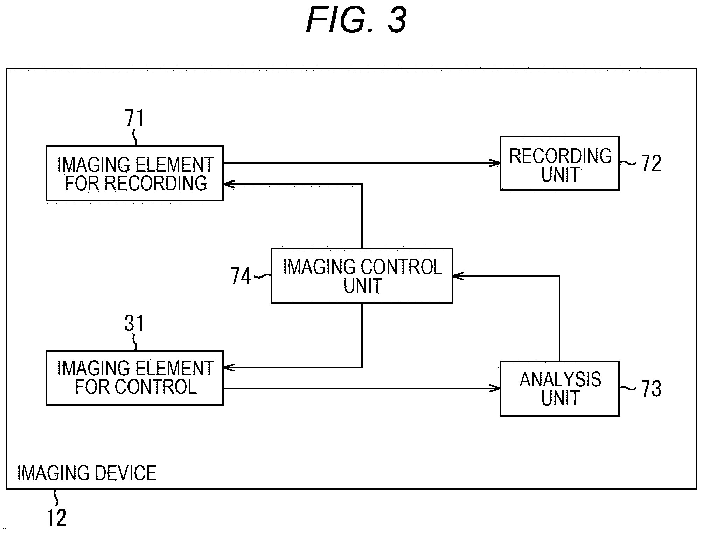

Fig. 3 is a block diagram showing a configuration example of the imaging device 12 of Fig. 1.

The imaging device 12 includes an imaging element 71 for recording, a recording unit 72, an analysis unit 73, and an imaging control unit 74, in addition to the imaging element 31 for control described above.

As described above, the imaging element 31 for control includes the rolling shutter type CMOS image sensor having at least the sensitivity to the wavelength region of the infrared pulsed light. The sensitivity of the imaging element 31 for control is preferably set to a minimum wavelength region centered on the wavelength region of the infrared pulsed light. The imaging element 31 for control supplies image data (hereinafter, referred to as image data for control) obtained as a result of imaging to the analysis unit 73.

The imaging element 71 for recording includes a rolling shutter type CMOS image sensor that has the sensitivity to visible light and does not have the sensitivity to the wavelength region of the infrared pulsed light. The imaging element 71 for recording supplies image data (hereinafter, referred to as image data for recording) obtained as a result of imaging to the recording unit 72.

In addition, the numbers of pixel rows and pixel columns in the imaging element 31 for control and the imaging element 71 for recording are not necessarily matched. However, at least the numbers of pixel rows of both are preferably matched.

Further, hereinafter, a direction of pixel rows (hereinafter, also simply referred to as rows) in the imaging element 31 for control and the imaging element 71 for recording is referred to as a horizontal direction and a direction of pixel columns (hereinafter, also simply referred to as columns) is referred to as a vertical direction.

The recording unit 72 includes a recording medium and records image data for recording.

The analysis unit 73 analyzes a light reception distribution to be a distribution of a light reception amount of the imaging element 31 for control with respect to the infrared pulsed light, on the basis of the image data for control, and supplies an analysis result to the imaging control unit 74.

The imaging control unit 74 controls imaging of the imaging element 31 for control and the imaging element 71 for recording by generating a vertical synchronization signal and a horizontal synchronization signal and supplying them to the imaging element 31 for control and the imaging element 71 for recording. Further, the imaging control unit 74 adjusts an imaging timing of the imaging element 71 for recording by adjusting the vertical synchronization signal and the horizontal synchronization signal, on the basis of the light reception distribution analyzed by the analysis unit 73, and synchronizes the imaging element 71 for recording with imaging elements 71 for recording in other imaging devices 12.

### <Synchronization control processing of imaging device>

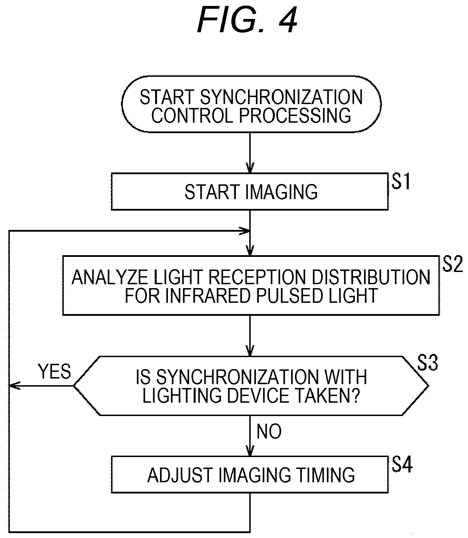

Next, synchronization control processing executed by each imaging device 12 of the imaging system 10 will be described with reference to a flowchart of Fig. 4. For example, this processing starts when an operation for starting imaging is performed on the imaging device 12 and ends when an operation for ending the imaging is performed.

In step S1, the imaging device 12 starts the imaging. Specifically, the imaging control unit 74 starts supply of the vertical synchronization signal and the horizontal synchronization signal to the imaging element 31 for control and the imaging element 71 for recording. In addition, the imaging control unit 74 supplies the vertical synchronization signal and the horizontal synchronization signal of the same phase and the same frequency to the imaging element 31 for control and the imaging element 71 for recording. The imaging element 31 for control and the imaging element 71 for recording start the imaging, according to the vertical synchronization signal and the horizontal synchronization signal from the imaging control unit 74. The imaging element 31 for control starts supply of image data for control obtained as a result of the imaging to the analysis unit 73. The imaging element 71 for recording starts supply of the image data for recording obtained as a result of the imaging to the recording unit 72 and the analysis unit 73. The recording unit 72 starts recording of the image data for recording.

In addition, each imaging device 12 does not need to start the imaging at the same time.

Further, at the start of the imaging by the imaging device 12, the lighting device 11 starts emission of the infrared pulsed light. A light emitting frequency of the infrared pulsed light is set on the basis of a frame rate of the imaging element 71 for recording. Specifically, the light emitting frequency of the infrared pulsed light is set to the same frequency as the frame rate of the imaging element 71 for recording. In addition, a timing at which the imaging device 12 starts the imaging and a timing at which the lighting device 11 starts emission of the infrared pulsed light do not need to be the same, and start order may be sequential order.

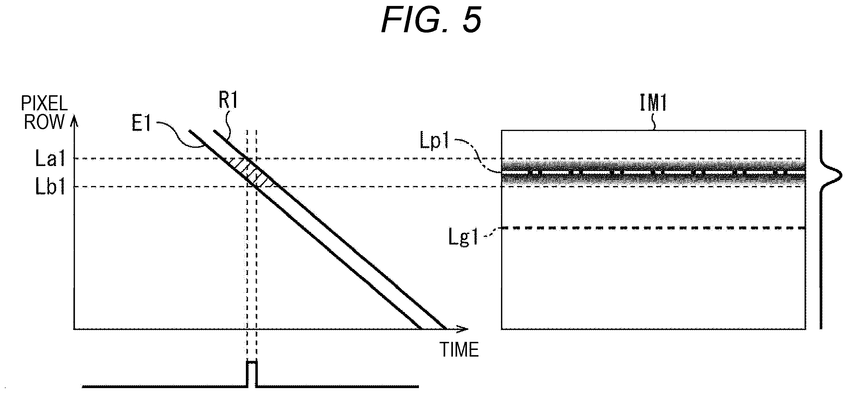

In step S2, the analysis unit 73 analyzes a light reception distribution for the infrared pulsed light. Here, a specific example of a method of analyzing the light reception distribution will be described with reference to Fig. 5.

A left graph of Fig. 5 shows an example of an exposure start timing and a read start timing of each row of the imaging element 31 for control. A horizontal axis of this graph indicates a time and a vertical axis indicates a pixel row. Further, a straight line E1 indicates the exposure start timing of each row and a straight line R1 indicates the read start timing of each row. Further, the light emitting timing of the infrared pulsed light is shown under the left graph of Fig. 5.

A center of Fig. 5 schematically shows an example of a distribution of pixel values of image data IM1 for control. In this drawing, it is assumed that a pixel value is larger (brightness is higher) as a color is darker and the pixel value is smaller (brightness is lower) as the color is lighter.

A right graph of Fig. 5 shows a distribution of pixel values of a vertical direction of the image data IM1 for control. A vertical axis of this graph indicates a row of the image data IM1 for control and a horizontal axis indicates a pixel value. For example, an integrated value, an average value, a median value, or the like, of pixel values of each row of the image data IM1 for control is used in the pixel value of each row.

In addition, hereinafter, a time reaching from when the exposure of a first row of the imaging element 31 for control starts to when the exposure of a final row ends is referred to as a total exposure time and a time reaching from when the read of the first row of the imaging element 31 for control starts to when the read of the final row ends is referred to as a total read time.

The imaging element 31 for control is of the rolling shutter type as described above, and timings at which the exposure of each row and the read of the pixel data start are shifted by a predetermined time. In addition, a exposure period between the exposure start timing and the read start timing is shifted by a predetermined time for each row. In addition, in the graph of Fig. 5, the exposure period is shown shorter than that of a normal case to facilitate explanation.

On the other hand, a pulse width of the infrared pulsed light is set to be sufficiently shorter than the total exposure time and the total read time of the imaging element 31 for control. Therefore, irradiation of the infrared pulsed light is performed only in an exposure period to partial rows of the imaging element 31 for control, that is, La1 to Lb1. Further, there are a row irradiated with the infrared pulsed light over the entire exposure period and a row irradiated with the infrared pulsed light over the partial exposure period.

In addition, hereinafter, a range from the row La1 to the row Lb1 of the imaging element 31 for control irradiated with the infrared pulsed light during the exposure period is referred to as a vertical irradiation range.

Therefore, as shown on the right side of Fig. 5, a distribution of pixel values of the vertical direction of the image data IM1 for control, that is, a distribution of a light reception amount of the vertical direction of the imaging element 31 for control with respect to the infrared pulsed light peaks at a center row Lp1 in the vertical irradiation range, and has a bell shape substantially symmetrical about the row Lp1 in the vertical irradiation range.

In addition, the analysis unit 73 detects the row Lp1 at which the pixel value peaks in the vertical direction of the image data for control. The row Lp1 is a row (brightest row) in which the brightness becomes highest in the image data for control by being irradiated with the infrared pulsed light, and is hereinafter referred to as a brightness peak row. The analysis unit 73 supplies a detection result of the brightness peak row to the imaging control unit 74.

In step S3, the imaging control unit 74 determines whether or not synchronization with the lighting device 11 is taken. In a case where the brightness peak row is not matched with a predetermined target row (hereinafter, referred to as a target peak row), the imaging control unit 74 determines that the synchronization with the lighting device 11 is not taken, and the processing proceeds to step S4.

For example, in the example of Fig. 5, the target peak row Lg1 is set to the center row of the image data for control (imaging element 31 for control) and is not matched with the brightness peak row Lp1. In this case, it is determined that the synchronization with the lighting device 11 is not taken, and the processing proceeds to step S4.

In addition, the target peak row does not need to be set to the center of the imaging element 31 for control, and can be set to any row other than near an upper end and a lower end of the imaging element 31 for control.

In step S4, the imaging control unit 74 adjusts the imaging timing. Specifically, the imaging control unit 74 adjusts a speed of an operation clock used for generating the vertical synchronization signal and the horizontal synchronization signal, and matches the brightness peak row with the target peak row.

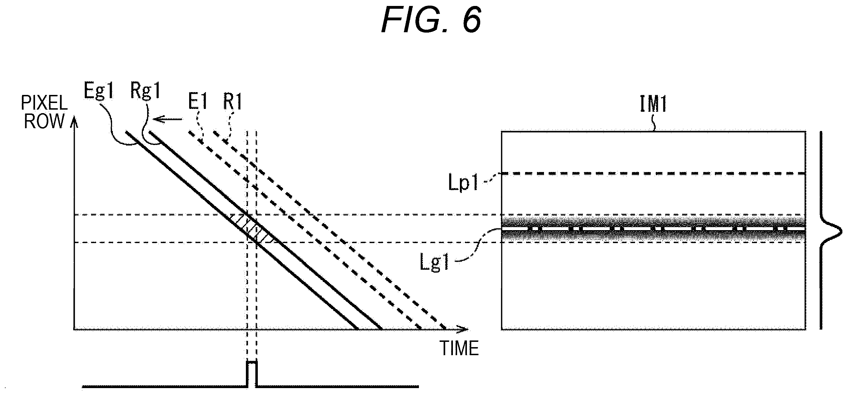

For example, as shown in an example of Fig. 6, in a case where the brightness peak row Lp1 exists above the target peak row Lg1 in the image data IM1 for control, an exposure start timing E1 and a read start timing R1 are later than a target exposure start timing Eg1 and a target read start timing Rg1. Therefore, the imaging control unit 74 increases the speed of the operation clock and advances the exposure start timing and the read start timing, so that the brightness peak row is matched with the target peak row Lg1. With this arrangement, the exposure start timing and the read start timing are matched with the target exposure start timing Eg1 and the target read start timing Rg1. That is, the exposure period of each row is matched with a target exposure period.

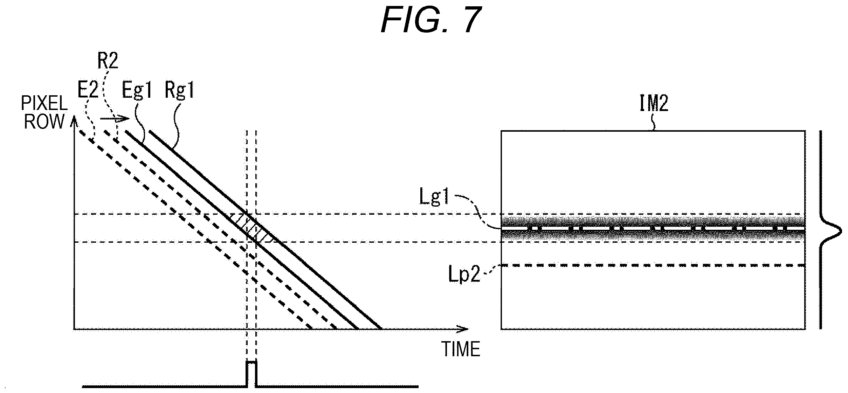

On the other hand, for example, as shown in an example of Fig. 7, in a case where the brightness peak row Lp2 exists under the target peak row Lg1 in image data IM2 for control, an exposure start timing E2 and a read start timing R2 are earlier than the target exposure start timing Eg1 and the target read start timing Rg1. Therefore, the imaging control unit 74 decreases the speed of the operation clock and delays the exposure start timing and the read start timing, so that the brightness peak row is matched with the target peak row Lg1. With this arrangement, the exposure start timing and the read start timing are matched with the target exposure start timing Eg1 and the target read start timing Rg1. That is, the exposure period of each row is matched with a target exposure period.

Then, the processing returns to step S2, and the processing after step S2 is performed.

On the other hand, in a case where the detected brightness peak row is matched with the target peak row, in step S3, the imaging control unit 74 determines that the synchronization with the lighting device 11 is taken, and the processing returns to step S2. Then, the processing after step S2 is performed.

In this way, by synchronizing the lighting device 11 and the respective imaging devices 12 with each other, that is, in a state in which the exposure start timing and the read start timing of each row of the imaging element 71 for recording in the respective imaging devices 12 are substantially matched and the exposure periods of the respective rows are substantially matched, the respective imaging devices 12 can perform imaging (synchronous imaging) in parallel. Therefore, even in a case where it is difficult to connect the imaging devices 12 or each imaging device 12 and the control device by a cable, such as a case where the imaging device 12 is attached to a moving object such as a person or imaging is performed in water, for example, the imaging devices 12 can be synchronized with each other.

Further, since synchronization control is always performed in parallel with the imaging of each imaging device 12, synchronization accuracy is improved.

Further, since the imaging element 71 for recording does not have the sensitivity to the wavelength region of the infrared pulsed light, the image data for recording is not affected by the infrared pulsed light.

In addition, in order to increase the synchronization accuracy between the imaging devices 12, the pulse width of the infrared pulsed light is preferably minimized. However, if the pulse width of the infrared pulsed light is shortened, a light amount of the infrared pulsed light decreases, which may make it difficult to detect the brightness peak row, and the synchronization accuracy may decrease. Therefore, the pulse width and the light amount of the infrared pulsed light are set according to the required synchronization accuracy, for example.

### <<2. Second embodiment>>

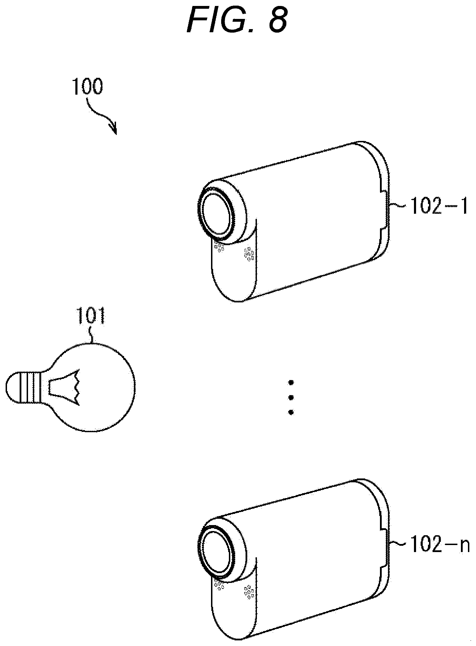

Next, a second embodiment of the present technology will be described with reference to Figs. 8 to 12. In the second embodiment, imaging devices are synchronized using image data for recording, without using image data for control.

### <Configuration example of imaging system>

Fig. 8 is a block diagram showing a configuration example of an imaging system 100 to which the present technology is applied.

The imaging system 10 includes a lighting device 101 and n imaging devices 102-1 to 102-n.

The lighting device 101 emits pulsed light (hereinafter, referred to as visible pulsed light) including visible light.

The imaging devices 102-1 to 102-n perform imaging while being synchronized with each other, according to the visible pulsed light.

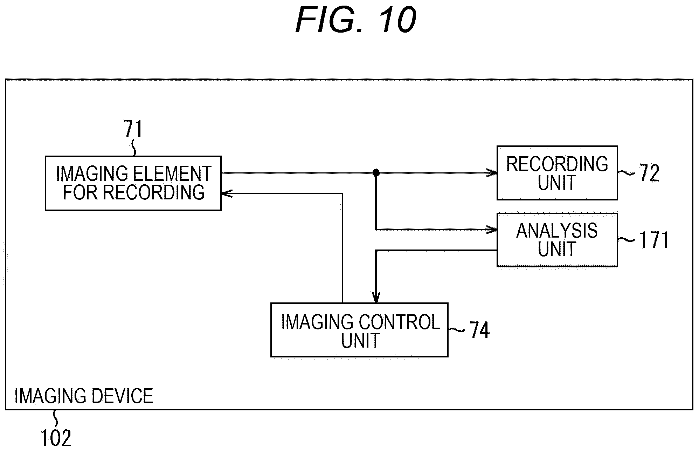

The lighting device 101 may be provided separately from the imaging devices 102-1 to 102-n or may be included in any one of the imaging devices 102-1 to 102-n. However, in any case, the lighting device 101 is preferably arranged so that light reception surfaces of imaging elements 71 (Fig. 10) for recording in the imaging devices 102-1 to 102-n are irradiated with the visible pulsed light substantially uniformly.

Further, hereinafter, in a case where it is not necessary to distinguish the imaging devices 102-1 to 102-n, they are simply referred to as the imaging devices 102. Further, the number of imaging devices 102 can be set to any number of two or more.

### <Configuration example of lighting device>

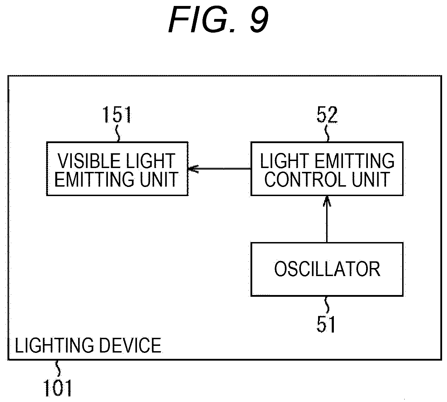

Fig. 9 is a block diagram showing a configuration example of the lighting device 101 of Fig. 8. In the drawing, the same reference numerals are attached to portions corresponding to those of a lighting device 11 of Fig. 2, and the description thereof is appropriately omitted.

The lighting device 101 includes a visible light emitting unit 151 instead of an infrared light emitting unit 53, as compared with the lighting device 11.

The visible light emitting unit 151 includes a light emitting device such as an LED, for example, and emits the visible pulsed light on the basis of a light emitting control signal from a light emitting control unit 52.

### <Configuration example of imaging device>

Fig. 10 is a block diagram showing a configuration example of the imaging device 102 of Fig. 8. In addition, in the drawing, the same reference numerals are attached to portions corresponding to those of an imaging device 12 of Fig. 3, and the description thereof is appropriately omitted.

The imaging device 102 is different from the imaging device 12 in that an analysis unit 171 is provided instead of an analysis unit 73 and an imaging element 31 for control is removed.

The analysis unit 171 analyzes a light reception distribution to be a distribution of a light reception amount of an imaging element 71 for recording for the visible pulsed light, on the basis of image data for recording supplied from the imaging element 71 for recording, and supplies an analysis result to an imaging control unit 74.

### <Synchronization control processing of imaging device>

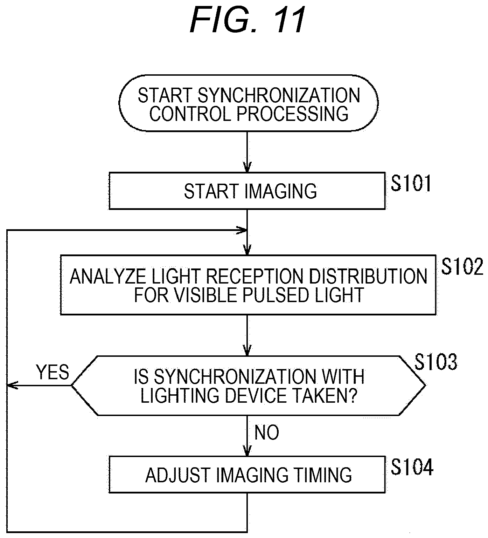

Next, synchronization control processing executed by each imaging device 102 of the imaging system 100 will be described with reference to a flowchart of Fig. 11. For example, this processing starts when an operation for starting imaging is performed on the imaging device 102 and ends when an operation for ending the imaging is performed.

In step S101, the imaging device 102 starts imaging. Specifically, the imaging control unit 74 starts supply of a vertical synchronization signal and a horizontal synchronization signal to the imaging element 71 for recording. The imaging element 71 for recording starts the imaging, according to the vertical synchronization signal and the horizontal synchronization signal from the imaging control unit 74. The imaging element 71 for recording starts supply of the image data for recording obtained as a result of the imaging to a recording unit 72 and the analysis unit 171. The recording unit 72 starts recording of the image data for recording.

In addition, each imaging device 102 does not need to start the imaging at the same time.

Further, at the start of the imaging by the imaging device 102, the lighting device 101 starts emission of the visible pulsed light. A light emitting frequency of the visible pulsed light is set to the same frequency as a frame rate of the imaging element 71 for recording. In addition, a timing at which the imaging device 102 starts the imaging and a timing at which the lighting device 101 starts emission of the visible pulsed light do not need to be the same, and start order may be sequential order.

In step S102, the analysis unit 171 analyzes a light reception distribution for the visible pulsed light. That is, the analysis unit 171 detects a brightness peak row of the image data for recording, by processing similar to that in a case where the analysis unit 73 of the imaging device 12 detects a brightness peak row of image data for control, in step S2 of Fig. 4. The analysis unit 171 supplies a detection result of the brightness peak row to the imaging control unit 74.

In step S103, the imaging control unit 74 determines whether or not synchronization with the lighting device 101 is taken. In a case where the detected brightness peak row is not matched with a predetermined target peak row, the imaging control unit 74 determines that the synchronization with the lighting device 101 is not taken, and the processing proceeds to step S104.

In addition, the target peak row is set in a region not to be a display target (hereinafter, referred to as an unused region) in a pixel region of the imaging element 71 for recording. On the other hand, a region to be the display target in the pixel region of the imaging element 71 for recording is hereinafter referred to as a used region. Therefore, in the case of displaying an image based on image data for recording imaged by the imaging element 71 for recording, an image in the used region is displayed and an image in the unused region is not displayed. In addition, depending on a specification of a display device or the like, a part of the image in the used region may not be displayed.

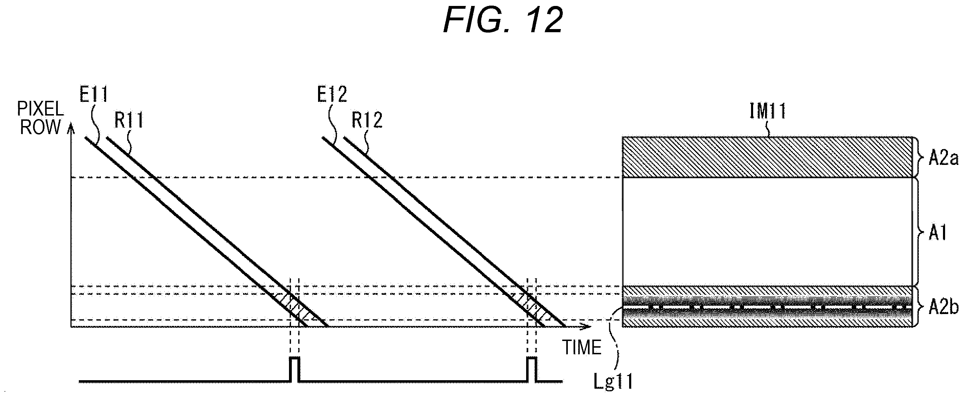

Here, an example of a setting position of the target peak row will be described with reference to Fig. 12.

A left graph of Fig. 12 shows an example of an exposure start timing and a read start timing of each row of the imaging element 71 for recording. Similar to a left graph of Fig. 5, a horizontal axis of this graph indicates a time and a vertical axis indicates a pixel row. Further, a straight line E11 and a straight line E12 indicate the exposure start timing of each row and a straight line R11 and a straight line R12 indicate the read start timing of each row. Further, the light emitting timing of the visible pulsed light is shown under the left graph of Fig. 12.

Similar to image data IM1 for control at the center of Fig. 5, the right side of Fig. 12 schematically shows an example of a distribution of pixel values of image data IM11 for recording.

In the image data IM11 for recording, an unused region A2a and an unused region A2b are arranged on and under a used region A1. For example, in a case where the imaging element 71 for recording with an aspect ratio (horizontal: vertical) of 4 : 3 or 3 : 2 is used to perform imaging of image data with an aspect ratio of 16 : 9, only pixel data in the used region A1 at the center in the image data for recording imaged by the imaging element 71 for recording is used, and pixel data in the unused region A2a and the unused region A2b on and under the used region is not used. In addition, in this case, when the image data for recording is recorded in the recording unit 72, the pixel data in the unused region A2a and the unused region A2b may be left or removed. In the former case, when an image based on the image data for recording is displayed, processing is performed so that images in the unused region A2a and the unused region A2b are not displayed.

In addition, for example, by arranging a target peak row Lg11 in the unused region A2b, it is possible to perform irradiation of the visible pulsed light only during an exposure period of a row in the unused region A2b and perform synchronization control. Therefore, the visible pulsed light is emitted during the exposure period of the row in the used region A1, and pixel data to be a display target is prevented from being affected by the visible pulsed light.

In addition, the target peak row Lg11 may be arranged in the unused region A2a.

In step S104, the imaging control unit 74 adjusts imaging timing. Specifically, similar to processing of step S4 of Fig. 4, the imaging control unit 74 adjusts a speed of an operation clock used for generating the vertical synchronization signal and the horizontal synchronization signal and matches the brightness peak row with the target peak row.

Then, the processing returns to step S102 and the processing after step S102 is performed.

Meanwhile, in a case where it is determined in step S103 that the synchronization with the lighting device 101 is taken, the processing returns to step S102. Then, the processing after step S102 is performed.

In this way, it is possible to synchronize the imaging devices 12 using the visible pulsed light, without affecting the pixel data to be a display target. With this arrangement, it is not necessary to provide the imaging element 31 for control, and the configuration of the imaging device 102 can be simplified.

In addition, the analysis unit 171 may detect the brightness peak row after extracting a component of the visible pulsed light from the image data for recording.

For example, the lighting device 101 emits the visible pulsed light at an interval of two frames or more at the frame rate of the imaging element 71 for recording. With this arrangement, there are image data for recording imaged at a timing at which the visible pulsed light is emitted and irradiation of the visible pulsed light is performed and image data for recording imaged at a timing at which the visible pulsed light is not emitted and the irradiation of the visible pulsed light is not performed. In addition, the analysis unit 171 generates differential image data by taking a difference between the former image data for recording and the latter image data for recording. In the differential image data, background components other than the visible pulsed light are removed and only components of the visible pulsed light components are extracted. In addition, the analysis unit 171 detects the brightness peak row on the basis of the differential image data. With this arrangement, detection accuracy of the brightness peak row is improved and synchronization accuracy is improved.

In addition, the synchronization control processing of Fig. 11 is performed in a case where each imaging device 12 is set to an imaging mode in which irradiation of the visible pulsed light can be performed (hereinafter, referred to as a pulsed light irradiation permission mode). That is, a synchronization function is enabled. On the other hand, the synchronization control processing of Fig. 11 is not performed in a case where each imaging device 12 is set to an imaging mode in which the irradiation of the visible pulsed light cannot be performed (hereinafter, referred to as a pulsed light irradiation non-permission mode). That is, the synchronization function is disabled.

Here, the imaging mode indicates an aspect ratio of the used region (aspect ratio of an image recorded as a display target), a frame rate, and the like, for example.

Further, in the pulsed light irradiation permission mode, for example, since the aspect ratio of the imaging element 71 for recording and the aspect ratio of the used region are not matched and there is an unused region, an imaging mode in which the target peak row can be set in the unused region is included. On the other hand, in the pulsed light irradiation non-permission mode, for example, since the aspect ratio of the imaging element 71 for recording and the aspect ratio of the used region are matched and there is no unused region, an imaging mode in which the target peak row cannot be set in the unused region is included.

Therefore, for example, when the imaging mode in which the aspect ratio of the imaging element 71 for recording and the aspect ratio of the used region are matched is changed to the imaging mode in which the aspect ratios are not matched, the pulsed light irradiation non-permission mode transits to the pulsed light irradiation permission mode, and the synchronization control processing of Fig. 11 starts. On the other hand, for example, when the imaging mode in which the aspect ratio of the imaging element 71 for recording and the aspect ratio of the used region are not matched is changed to the imaging mode in which the aspect ratios are matched, the pulsed light irradiation permission mode transits to the pulsed light irradiation non-permission mode, and the synchronization control processing of Fig. 11 stops.

In addition, the imaging mode in which there is the unused region is not necessarily the pulsed light irradiation permission mode. For example, an imaging mode in which there is the unused region, but the target peak row cannot be set in the unused region is classified into the pulsed light irradiation non-permission mode. Here, a case where the target peak row cannot be set in the unused region is a case where the irradiation of the visible pulsed light is performed during the exposure period of the used region and the pixels in the used region are affected by the visible pulsed light, when irradiation of the visible pulsed light is performed so that the brightness peak row is matched with the target peak row, even though the target peak row is appropriately set in the unused region, for example. For example, a case where a period in which only the unused region is exposed is shorter than a light emitting period of the visible pulsed light or a case where an interval between the read start timing and the exposure start timing of each row is short due to an increase in the frame rate or the like and an exposure period of some rows in the used region and an exposure period of the unused region overlap is assumed.

### <<3. Third embodiment>>

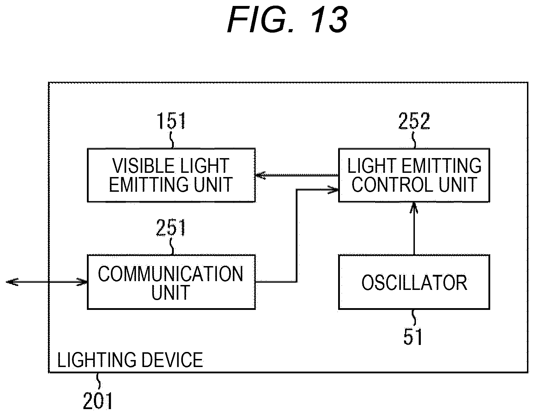

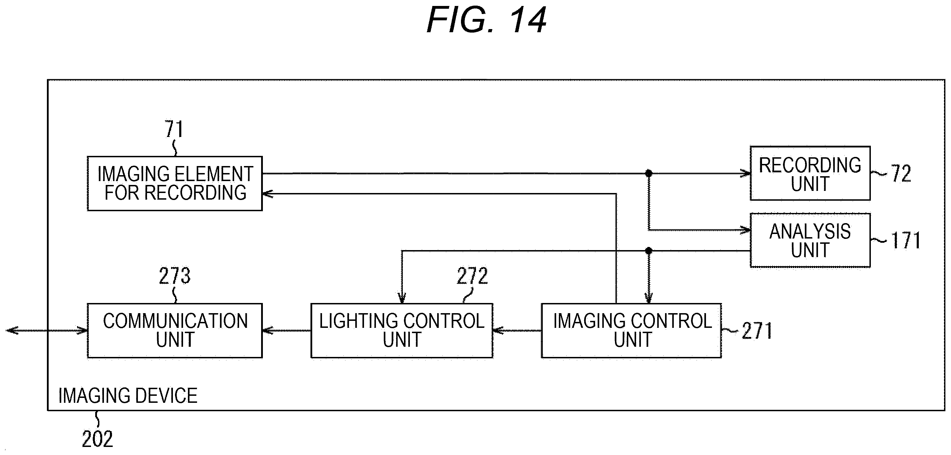

Next, a third embodiment of the present technology will be described with reference to Figs. 13 and 14. In the third embodiment of the present technology, a lighting device is controlled by an imaging device.

In the third embodiment, a lighting device 201 of Fig. 13 is used instead of a lighting device 101 of Fig. 9 and an imaging device 202 of Fig. 14 is used instead of an imaging device 102 of Fig. 10.

The lighting device 201 of Fig. 13 is different from the lighting device 101 of Fig. 9 in that a light emitting control unit 252 is provided instead of a light emitting control unit 52 and a communication unit 251 is added.

The communication unit 251 includes a communication device for performing wireless communication, for example. The communication unit 251 can wirelessly communicate with a communication unit 273 (Fig. 14) provided in each imaging device 202.

In addition, any method can be used as a communication method of the communication unit 251 and the communication unit 273.

The light emitting control unit 252 has a function similar to that of the light emitting control unit 52 of the lighting device 101. Further, the light emitting control unit 252 generates a light emitting control signal, on the basis of a light emitting control command received from the imaging device 202 via the communication unit 251, and supplies the light emitting control signal to a visible light emitting unit 151 to control the light emitting timing, the light emitting intensity, and the like, of the visible light emitting unit 151. With this arrangement, the imaging device 202 can control the light emitting timing, the light emitting intensity, and the like, of the lighting device 201.

The imaging device 202 of Fig. 14 is different from the imaging device 102 of Fig. 10 in that an imaging control unit 271 is provided instead of an imaging control unit 74 and a lighting control unit 272 and a communication unit 273 are added.

The imaging control unit 271 has a function similar to that of the imaging control unit 74 of the imaging device 102. Further, the imaging control unit 271 supplies information indicating an imaging mode of the imaging device 202 to the lighting control unit 272.

The lighting control unit 272 generates a lighting control command for controlling the lighting device 201, on the basis of an analysis result by an analysis unit 171 and the imaging mode, and transmits the lighting control command to the imaging device 202 via the communication unit 273.

The communication unit 273 includes a communication device for performing wireless communication, for example. The communication unit 273 can wirelessly communicate with the communication unit 251 provided in the lighting device 201.

For example, in a case where a mode transits to a pulsed light irradiation permission mode, the lighting control unit 272 generates a lighting control command for instructing emission of visible pulsed light and transmits the lighting control command to the lighting device 201 via the communication unit 273. On the other hand, the lighting device 201 starts emission of the visible pulsed light. In addition, the imaging device 202 starts the synchronization control processing described above with reference to Fig. 11. That is, a synchronization function is enabled.

Meanwhile, in a case where the mode transits to a pulsed light irradiation non-permission mode, the lighting control unit 272 generates a lighting control command for instructing a stop of emission of the visible pulsed light and transmits the lighting control command to the lighting device 201 via the communication unit 273. On the other hand, the lighting device 201 stops emission of the visible pulsed light. In addition, the imaging device 202 stops the synchronization control processing. That is, the synchronization function is disabled.

In addition, for example, the lighting control unit 272 generates an lighting control command for setting a light amount and a pulse width of the visible pulsed light, and transmits the lighting control command to the lighting device 201 via the communication unit 273 to control the light amount and the pulse width of the visible pulsed light.

With this arrangement, for example, in a case where the light amount of visible pulsed light is insufficient and it is difficult to detect a brightness peak row or detection accuracy of the brightness peak row is low, it is possible to increase the light amount of visible pulsed light or widen the pulse width. On the other hand, for example, in a case where the light amount of visible pulsed light is too large to give an unpleasant feeling to a surrounding person or saturate an imaging element 71 for recording, it is possible to decrease the light amount of visible pulsed light or narrow the pulse width.

Further, for example, in a case where high synchronization accuracy is required, it is possible to narrow the pulse width or increase the light amount of visible pulsed light. On the other hand, for example, in a case where the high synchronization accuracy is not required, it is possible to widen the pulse width or decrease the light amount of visible pulsed light.

### <<4. Fourth embodiment>>

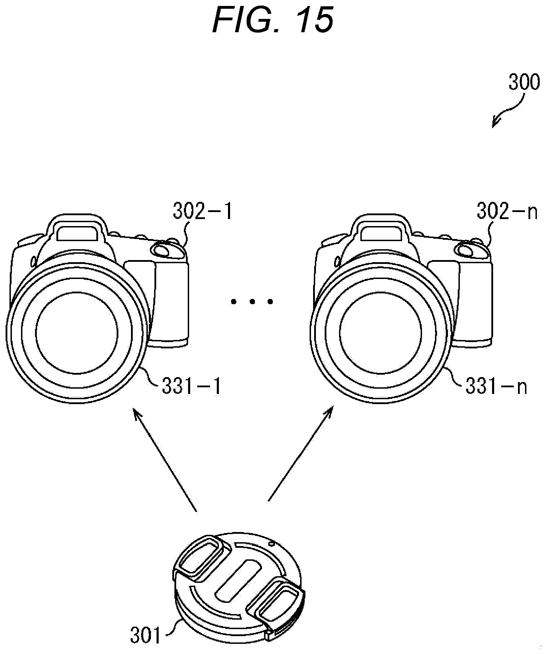

Next, a fourth embodiment of the present technology will be described with reference to Figs. 15 to 18.

As described above, in the second and third embodiments, in a case where a mode is set to a pulsed light irradiation non-permission mode, imaging devices 12 cannot be synchronized.

On the other hand, in the fourth embodiment, after the imaging devices are synchronized at the time of starting imaging, imaging is performed without performing synchronization control.

### <Configuration example of imaging system>

Fig. 15 is a block diagram showing a configuration example of an imaging system 300 to which the present technology is applied.

The imaging system 300 includes a lighting device 301 and n imaging devices 302-1 to 302-n.

The lighting device 301 has a circuit configuration similar to that of a lighting device 101 of Fig. 9 and emits visible pulsed light. Further, the lighting device 301 has a lens cap shape, and can be attached to lenses 331-1 to 331-n of the imaging devices 302-1 to 302-n.

The imaging devices 302-1 to 302-n individually adjust imaging timing, on the basis of the visible pulsed light emitted from the lighting device 301, and perform imaging in synchronization with each other.

In addition, hereinafter, in a case where it is not necessary to distinguish the imaging devices 302-1 to 302-n, they are simply referred to as the imaging devices 302. Hereinafter, in a case where it is not necessary to distinguish the lenses 331-1 to 331-n, they are referred to as the lenses 331.

### <Configuration example of lighting device>

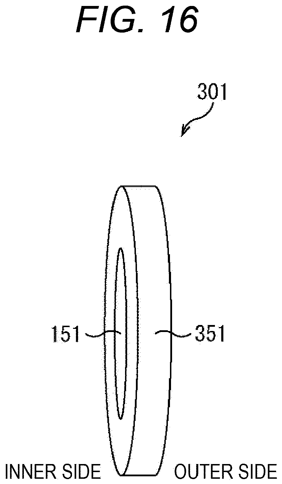

Fig. 16 is a schematic diagram of the lighting device 301 viewed from the side. As described above, the lighting device 301 has a circuit configuration similar to that of the lighting device 101 of Fig. 9, and a visible light emitting unit 151 is provided on the inner side of a lens cap type casing 351 (the side attached to the lens 331). Therefore, the lighting device 301 emits the visible pulsed light to the lens 331 of the imaging device 302, in a state in which the lighting device 301 is attached to the lens 331 of the imaging device 302. At this time, the visible pulsed light is prevented from leaking to the outer side of the casing 351.

### <Configuration example of imaging device>

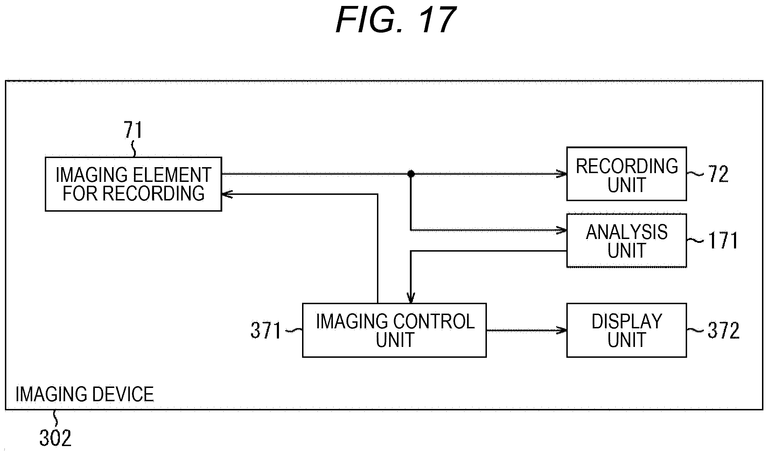

Fig. 17 is a block diagram showing a configuration example of the imaging device 302 of Fig. 15. In addition, in the drawing, the same reference numerals are attached to portions corresponding to those of Fig. 10, and the description thereof is appropriately omitted.

The imaging device 302 is different from the imaging device 102 of Fig. 10 in that an imaging control unit 371 is provided instead of an imaging control unit 74 and a display unit 372 is added.

The imaging control unit 371 has a function similar to that of the imaging control unit 74 of the imaging device 102. In a case where synchronization with the lighting device 301 is taken, the imaging control unit 371 notifies the display unit 372 that the synchronization has been taken.

The display unit 372 includes a display or a light such as an LED, for example, and performs display indicating whether or not the synchronization with the lighting device 301 is taken.

### <Processing of imaging system>

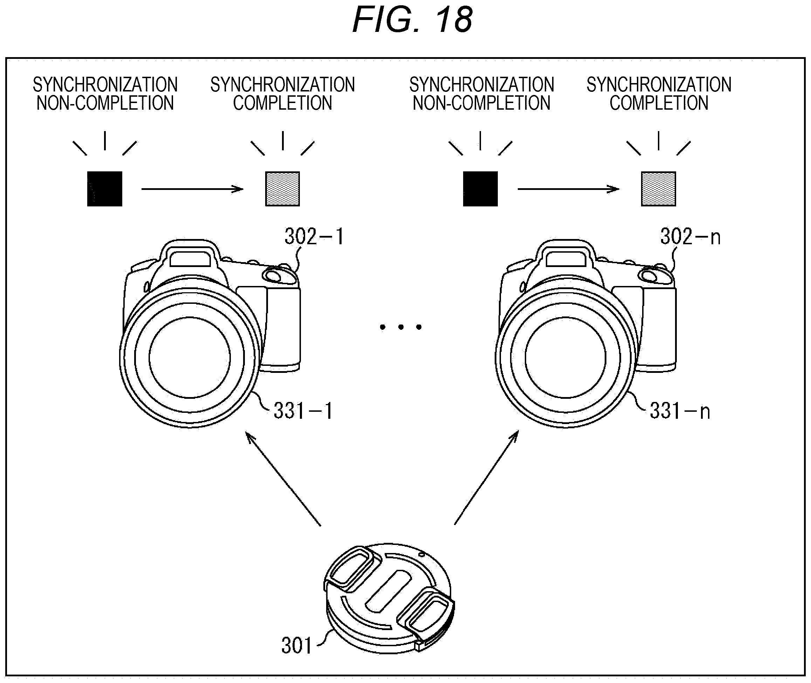

Next, processing of the imaging system 300 will be described with reference to Fig. 18.

First, a power supply of the lighting device 301 is turned on and the lighting device 301 starts emission of the visible pulsed light.

Next, the lighting device 301 is attached to the lens 331-1 of the imaging device 302-1 and the imaging of the imaging device 302-1 starts. In addition, order of the attaching of the lens 331-1 and the start of the imaging of the imaging device 302-1 may be any sequential order. The imaging device 302-1 executes the synchronization control processing described above with reference to Fig. 11 and takes synchronization with the lighting device 301. At this time, a target peak row is set in a used region of an imaging element 71 for recording. Further, the display unit 372 of the imaging device 302-1 performs display indicating synchronization non-completion until synchronization with the lighting device 301 is taken. After the synchronization is taken, the display unit 372 performs display indicating synchronization completion.

Then, the lighting device 301 is attached to the lens 331 of each imaging device 302 in order while the visible pulsed light is continuously emitted, and each imaging device 302 takes synchronization with the lighting device 301, similar to the imaging device 302-1.

In addition, all the imaging devices 302 are synchronized with the lighting device 301, so that the imaging devices 302 are synchronized with each other and perform imaging in synchronization with each other.

In addition, in this case, the imaging devices 302 cannot be synchronized during the imaging. However, sufficient synchronization accuracy is secured unless the imaging takes a long time.

Further, since the visible pulsed light is emitted in a state in which the lighting device 301 is attached to the lens 331 of the imaging device 302 and approaches the imaging element 71 for recording in the imaging device 302, a light amount of visible pulsed light can be reduced. Further, since outside light other than the visible pulsed light hardly enters the imaging element 71 for recording, synchronization accuracy is improved.

In addition, for example, synchronization control processing of the plurality of imaging devices 302 may be simultaneously performed at the time of starting the imaging by allowing the plurality of imaging devices 302 to be irradiated with the visible pulsed light, similar to the lighting device 101 of Fig. 8, instead of configuring the lighting device 301 as the lens cap type.

### <<5. Modification>>

Hereinafter, modifications of the embodiments of the present technology will be described.

In the second to fourth embodiments, the imaging element for recording may have the sensitivity to the infrared light and the lighting device may emit the infrared pulsed light. In this case, the respective imaging devices may be synchronized with each other using the infrared pulse light.

Further, the present technology can also be applied to the case of taking synchronization between imaging devices including rolling shutter type imaging elements other than the CMOS image sensors. Further, the present technology can also be applied to the case of taking synchronization between imaging devices including rolling shutter type imaging elements that shift an exposure period by a predetermined time in row units of two rows or more.

Further, the present technology can also be applied to the case where a plurality of imaging devices is synchronized and continuously images an image at a predetermined frame rate, like continuous still image photographing and time-lapse photographing as well as normal moving image photographing.

Further, for example, the target peak row may be set over two rows or more and the synchronization between the imaging device and the lighting device may have a width.

Further, the aspect ratio of the imaging element 71 for recording, the aspect ratio of the used region, and the combination thereof are not limited to the examples described above, and can be set arbitrarily.

### <<6. Application example>>

The series of processing described above can be performed by hardware or software. In a case where the series of processing is performed by the software, a program configuring the software is installed in a computer. Here, the computer includes a computer incorporated in dedicated hardware, a general-purpose computer capable of executing various functions by installing various programs, and the like, for example.

The program executed by the computer can be provided after being recorded on removable media as package media or the like, for example. Further, the program can be provided via wired or wireless transmission media such as a local area network, the Internet, and digital satellite broadcasting. In addition, the program can be installed in advance in a storage unit of the computer.

In addition, the program executed by the computer may be a program in which processing is performed in chronological order according to the order described in the present specification or a program in which processing is performed in parallel or at a necessary timing such as when a call is made.

Further, in the present specification, the system means a set of a plurality of components (devices, modules (parts), and the like) and it does not matter whether or not all the components are in the same casing. Therefore, both a plurality of devices that is stored in separate casings and is connected via a network and one device that has a plurality of modules stored in one casing are the systems.

Further, the embodiments of the present technology are not limited to the embodiments described above, and various changes can be made without departing from the gist of the present technology.

For example, each step described in the flowchart described above may be executed by one device or may be shared and executed by a plurality of devices.

Further, in a case where a plurality of processing is included in one step, the plurality of processing included in one step can be executed by one device or can be shared and executed by a plurality of devices.

Further, the effects described in the present specification are merely examples and are not limited, and other effects may be present.

Further, for example, the present technology may take the following configurations.
(1) An imaging device including:
   a rolling shutter type first imaging element;
   an analysis unit analyzing a light reception distribution to be a distribution of a light reception amount of a pixel column direction of the first imaging element for pulsed light of a predetermined frequency; and
   an imaging control unit adjusting an imaging timing of the first imaging element, on the basis of the light reception distribution.
(2) The imaging device according to (1), in which
   the analysis unit detects a brightness peak row to be a pixel row in which a brightness peaks in the light reception distribution, and
   the imaging control unit adjusts the imaging timing of the first imaging element and matches the brightness peak row with a target peak row to be a predetermined pixel row.
(3) The imaging device according to (2), in which
   the target peak row is set in a used region to be a display target of the first imaging element, and
   the imaging control unit adjusts the imaging timing of the first imaging element at the time of starting imaging.
(4) The imaging device according to (2), in which the target peak row is set in an unused region not to be a display target of the first imaging element.
(5) The imaging device according to (4), in which the imaging control unit adjusts the imaging timing of the first imaging element in parallel with imaging.
(6) The imaging device according to (4) or (5), in which
   the pulsed light is visible light.
(7) The imaging device according to any one of (4) to (6), further including:
   a communication unit wirelessly communicating with a lighting device emitting the pulsed light; and
   a lighting control unit controlling the lighting device via the communication unit, in which
   in a case where setting of the target peak row in the unused region is enabled, the lighting control unit causes the lighting device to emit the pulsed light, and in a case where the setting of the target peak row in the unused region is disabled, the lighting control unit causes the lighting device to stop emission of the pulsed light.
(8) The imaging device according to any one of (4) to (7), in which
   in a case where an aspect ratio of the first imaging element and an aspect ratio of the used region are not matched, the imaging control unit performs adjustment of the imaging timing of the first imaging element based on the light reception distribution, and in a case where the aspect ratio of the first imaging element and the aspect ratio of the used region are matched, the imaging control unit does not perform the adjustment of the imaging timing of the first imaging element based on the light reception distribution.
(9) The imaging device according to any one of (2) to (8), in which
   the pulsed light is emitted at an interval of two frames or more at a frame rate of the first imaging element, and
   the analysis unit detects the brightness peak row, on the basis of a differential image between a first image imaged by the first imaging element at a timing at which the pulsed light is emitted and a second image imaged by the first imaging element at a timing at which the pulsed light is not emitted.
(10) The imaging device according to any one of (1) to (9), in which
   the imaging control unit adjusts exposure and read start timings of each pixel row of the first imaging element.
(11) The imaging device according to (10), in which
   the imaging control unit adjusts the exposure and read start timings of each pixel row of the first imaging element, by adjusting a speed of an operation clock used for generating a vertical synchronization signal and a horizontal synchronization signal to be supplied to the first imaging element.
(12) The imaging device according to (11), further including:
   a rolling shutter type second imaging element not having sensitivity to a wavelength region of the pulsed light, in which
   the first imaging element has sensitivity to the wavelength region of the pulsed light, and
   the imaging control unit supplies the vertical synchronization signal and the horizontal synchronization signal of the same phase and the same frequency to the first imaging element and the second imaging element.
(13) The imaging device according to (12), in which
   the pulsed light is infrared light.
(14) The imaging device according to any one of (1) to (13), in which
   a frequency of the pulsed light is set on the basis of a frame rate of the first imaging element.
(15) An imaging control method including:
   an analysis step of analyzing a light reception distribution to be a distribution of a light reception amount of a pixel column direction for pulsed light of a predetermined frequency of a rolling shutter type imaging element; and
   an imaging control step of adjusting an imaging timing of the imaging element, on the basis of the light reception distribution.
(16) A program for causing a computer to execute processing including:
   an analysis step of analyzing a light reception distribution to be a distribution of a light reception amount of a pixel column direction for pulsed light of a predetermined frequency of a rolling shutter type imaging element; and
   an imaging control step of adjusting an imaging timing of the imaging element, on the basis of the light reception distribution.

### REFERENCE SIGNS LIST

- 10: Imaging system
- 11: Lighting device
- 12-1 to 12-n: Imaging device
- 31-1 to 31-n: Imaging element for control
- 52: Light emitting control unit
- 53: Infrared light emitting unit
- 71: Imaging element for recording
- 73: Analysis unit
- 74: Imaging control unit
- 100: Imaging system
- 101: Lighting device
- 102-1 to 102-n: Imaging device
- 151: Visible light emitting unit
- 171: Analysis unit
- 201: Lighting device
- 202-1 to 202-n: Imaging device
- 271: Imaging control unit
- 272: Lighting control unit
- 273: Communication unit
- 300: Imaging system
- 301: Lighting device
- 302-1 to 302-n: Imaging device
- 331-1 to 331-n: Lens
- 351: Casing
- 371: Imaging control unit
- 372: Display unit

## Claims

1. An imaging device comprising:
a rolling shutter type first imaging element;
an analysis unit configured to analyze a light reception distribution to be a distribution of a light reception amount of a pixel column direction of the first imaging element for pulsed light of a predetermined frequency; and
an imaging control unit configured to adjust an imaging timing of the first imaging element, on a basis of the light reception distribution.

2. The imaging device according to claim 1, wherein
the analysis unit detects a brightness peak row to be a pixel row in which a brightness peaks in the light reception distribution, and
the imaging control unit adjusts the imaging timing of the first imaging element and matches the brightness peak row with a target peak row to be a predetermined pixel row.

3. The imaging device according to claim 2, wherein
the target peak row is set in a used region to be a display target of the first imaging element, and
the imaging control unit adjusts the imaging timing of the first imaging element at a time of starting imaging.

4. The imaging device according to claim 2, wherein
the target peak row is set in an unused region not to be a display target of the first imaging element.

5. The imaging device according to claim 4, wherein
the imaging control unit adjusts the imaging timing of the first imaging element in parallel with imaging.

6. The imaging device according to claim 4, wherein
the pulsed light is visible light.

7. The imaging device according to claim 4, further comprising:
a communication unit configured to wirelessly communicate with a lighting device emitting the pulsed light; and
a lighting control unit configured to control the lighting device via the communication unit, wherein
in a case where setting of the target peak row in the unused region is enabled, the lighting control unit causes the lighting device to emit the pulsed light, and in a case where the setting of the target peak row in the unused region is disabled, the lighting control unit causes the lighting device to stop emission of the pulsed light.

8. The imaging device according to claim 4, wherein
in a case where an aspect ratio of the first imaging element and an aspect ratio of the used region are not matched, the imaging control unit adjusts the imaging timing of the first imaging element on a basis of the light reception distribution, and in a case where the aspect ratio of the first imaging element and the aspect ratio of the used region are matched, the imaging control unit does not adjust the imaging timing of the first imaging element on a basis of the light reception distribution.

9. The imaging device according to claim 2, wherein
the pulsed light is emitted at an interval of two frames or more at a frame rate of the first imaging element, and
the analysis unit detects the brightness peak row, on a basis of a differential image between a first image imaged by the first imaging element at a timing at which the pulsed light is emitted and a second image imaged by the first imaging element at a timing at which the pulsed light is not emitted.

10. The imaging device according to claim 1, wherein
the imaging control unit adjusts exposure and read start timings of each pixel row of the first imaging element.

11. The imaging device according to claim 10, wherein
the imaging control unit adjusts the exposure and read start timings of each pixel row of the first imaging element, by adjusting a speed of an operation clock used for generating a vertical synchronization signal and a horizontal synchronization signal to be supplied to the first imaging element.

12. The imaging device according to claim 11, further comprising:
a rolling shutter type second imaging element not having sensitivity to a wavelength region of the pulsed light, wherein
the first imaging element has sensitivity to the wavelength region of the pulsed light, and
the imaging control unit supplies the vertical synchronization signal and the horizontal synchronization signal of a same phase and a same frequency to the first imaging element and the second imaging element.

13. The imaging device according to claim 12, wherein
the pulsed light is infrared light.

14. The imaging device according to claim 1, wherein
a frequency of the pulsed light is set on a basis of a frame rate of the first imaging element.

15. An imaging control method comprising:
an analysis step of analyzing a light reception distribution to be a distribution of a light reception amount of a pixel column direction for pulsed light of a predetermined frequency of a rolling shutter type imaging element; and
an imaging control step of adjusting an imaging timing of the imaging element, on a basis of the light reception distribution.

16. A program for causing a computer to execute processing including:
an analysis step of analyzing a light reception distribution to be a distribution of a light reception amount of a pixel column direction for pulsed light of a predetermined frequency of a rolling shutter type imaging element; and
an imaging control step of adjusting an imaging timing of the imaging element, on a basis of the light reception distribution.
